# EUROPÄISCHE PATENTANMELDUNG

(11) **EP 1 215 100 A1**
(43) Veröffentlichungstag der Anmeldung: **19.06.2002**
(21) Anmeldenummer: 01129419.6
(22) Anmeldetag: 10.12.2001
(51) Int. Cl.: B61L 23/04

(54) **Vorrichtung und Verfahren zum Schutz vor Beschädigungen an Bahnoberleitungen und Schienenfahrzeugen durch einen Gegenstand**

(30) Priorität: 14.12.2000 DE 10062407
(71) Anmelder: Trend Network AG, 40210 Düsseldorf (DE)
(72) Erfinder: Möller, Michael, 40625 Düsseldorf (DE); Schäffer, Christian, 86343 Königsbrunn (DE)
(74) Vertreter: Cohausz & Florack

(57) **Zusammenfassung**

Die Erfindung betrifft eine Vorrichtung sowie ein Verfahren zum Schutz vor Beschädigungen an Bahnoberleitungen und Schienenfahrzeugen durch einen Gegenstand. Eine Vorrichtung und ein Verfahren, welche einen kostengünstigen und gleichzeitig zuverlässigen Schutz vor Beschädigungen an Bahnoberleitungen und Schienenfahrzeugen durch einen Gegenstand ermöglicht, wird dadurch zur Verfügung gestellt, daß das Schienenfahrzeug eine den Gegenstand erkennende und ein Steuersignal aussendende Erkennungsvorrichtung aufweist, und daß das Schienenfahrzeug eine einen Stromabnehmer steuernde Steuervorrichtung aufweist. Ein Verfahren bei welchem ein Gegenstand auf der Bahnoberleitung erkannt wird, und bei welchem bei einem erkannten Gegenstand ein Steuersignal an die Steuervorrichtung gesendet wird, wodurch ein Stromabnehmer von der Oberleitung entfernt wird, ist ebenfalls vorteilhaft.

## Beschreibung

Die Erfindung betrifft eine Vorrichtung sowie ein Verfahren zum Schutz vor Beschädigungen an Bahnoberleitungen und Schienenfahrzeugen durch einen Gegenstand.

Der überwiegende Teil der von Eisenbahngesellschaften eingesetzten Triebwagen wird elektrisch betrieben. Um die in den Triebwagen vorhandenen Elektromotoren mit elektrischer Energie zu versorgen, sind heutige Bahntrassen zuweist mit Oberleitungen ausgestattet. Die elektrische Energie wird durch Stromabnehmer, die auf der Oberseite von Triebwagen angeordnet sind, von den Oberleitungen entnommen. Die Oberleitungen sind ungeschützt und für jeden frei zugänglich. Es kommt häufig vor, daß zu Sabotagezwecken U-förmige Gebilde auf die Oberleitung geworfen werden. Diese sogenannten "Wurfanker" verhaken sich in der Oberleitung. Passiert ein Triebwagen eine mit einem Wurfanker sabotierte Stelle der Oberleitung, so verhakt sich zumeist der Wurfanker im Stromabnehmer des Triebwagens. Infolgedessen treten starke Beschädigungen am Stromabnehmer sowie an der Oberleitung auf. In einigen Fällen wird die Oberleitung auf dem fraglichen Streckenabschnitt komplett zerstört oder der Stromabnehmer des Triebwagens reißt ab. Neben dem entstehenden Sachschaden wird der nachfolgende Schienenverkehr erheblich gestört.

Die Zugführer der Triebwagen sind dazu angehalten, die Oberleitungen vor den Triebwagen zu beobachten und wenn sie einen Wurfanker auf der Oberleitung erkennen, eine Notbremsung einzuleiten. Problematisch ist dies jedoch bei Hochgeschwindigkeitszügen, die mit Geschwindigkeiten von über 200km/h fahren. Häufig erkennt der Zugführer den Wurfanker zu spät und der Stromabnehmer verhakt sich im Wurfanker trotz einer Notbremsung. Zusätzlich werden bei Hinweisen auf eventuelle Sabotageakte die Trassen von Hubschraubern abgeflogen und nach Wurfankern untersucht. Dies ist jedoch sehr kostenintensiv und nur dann möglich, wenn genügend Hinweise auf eine Sabotage eines bestimmten Streckenabschnitts vorliegen.

Der Erfindung liegt das technische Problem zugrunde, eine Vorrichtung und ein Verfahren zur Verfügung zu stellen, welche einen kostengünstigen und gleichzeitig zuverlässigen Schutz vor Beschädigungen an Bahnoberleitungen und Schienenfahrzeugen durch einen Gegenstand ermöglicht.

Das zuvor hergeleitete und aufgezeigte technische Problem wird erfindungsgemäß dadurch gelöst, daß das Schienenfahrzeug eine den Gegenstand erkennende und ein Steuersignal aussendende Erkennungsvorrichtung aufweist, und daß das Schienenfahrzeug eine einen Stromabnehmer steuernde Steuervorrichtung aufweist. Weiterhin wird das erfindungsgemäße Problem durch ein Verfahren gelöst, bei welchem ein Gegenstand auf der Bahnoberleitung erkannt wird, und bei welchem bei einem erkannten Gegenstand ein Steuersignal an die Steuervorrichtung gesendet wird, wodurch ein Stromabnehmer von der Oberleitung entfernt wird.

Die Erkennungsvorrichtung kann am Triebwagen oder einem Wagon angeordnet sein. Mit Hilfe geeigneter Mittel tastet die Erkennungsvorrichtung die Bahnoberleitung vor den Triebwagen in ausreichender Entfernung ab. Wird ein nicht erwarteter Gegenstand an der Bahnoberleitung erkannt, dies kann z.B. ein Wurfanker oder auch ein umgestürzter Baum sein, sendet die Erkennungsvorrichtung ein Steuersignal an die den Stromabnehmer steuernde Steuervorrichtung. Daraufhin entfernt die Steuervorrichtung den Stromabnehmer automatisch von der Oberleitung. In der Folge kann der Motor des Triebwagens keine elektrische Energie mehr aufnehmen, was einen elektrischen Vortrieb unmöglich macht. Jedoch besitzt der Zug genügend kinetische Energie, um unter dem durch den Gegenstand beeinträchtigten Abschnitt der Oberleitung hindurch zu fahren. Nachdem der fragliche Gegenstand vom Triebfahrzeug passiert worden ist, kann der Stromabnehmer wieder an die Oberleitungen geführt werden und die Fahrt fortgesetzt werden.

Größere Gegenstände blockieren nicht nur die Oberleitung selbst, sondern auch den Raum unter der Oberleitung. Daher ist es denkbar, daß die Steuervorrichtung den Stromabnehmer beim Entfernen von der Oberleitung komplett einfährt. Mit einem komplett eingefahrenen Stromabnehmer kann der Triebwagen auch Stellen passieren, an denen die Oberleitung massiv beeinträchtigt ist.

Es ist denkbar, daß mit Hilfe geeigneter Vorrichtungen der Streckenabschnitt auf dem der Gegenstand erkannt worden ist, an eine Bahnleitzentrale übermittelt wird und die Entfernung des Gegenstandes eingeleitet wird. Bei einer Geschwindigkeit des Zuges von 250 km/h legt der Zug eine Strecke von 70m pro Sekunde zurück. Beträgt die Zeit, welche die Steuervorrichtung zum Entfernen des Stromabnehmers von der Oberleitung benötigt 3 Sekunden, so hat der Zug in dieser Zeit eine Strecke von 210m zurückgelegt. Die Erkennungsvorrichtung muß dann derart ausgerichtet sein, daß die Oberleitung auf zumindest einer Strecke von 210m vor dem Triebwagen abgetastet werden kann.

Es wird vorgeschlagen, daß die Erkennungsvorrichtung einen Lasersensor aufweist. Der Lasersensor tastet die Oberleitung nach Gegenständen ab, indem er Reflektionen die von Gegenständen ausgehen, die sich an oder in der Nähe der Oberleitungen befinden, erkennt. Bei einem erkannten Gegenstand aktiviert er das Steuersignal.

Auch kann die Erkennungsvorrichtung einen Radarsensor aufweisen. Der Radarsensor sendet Radarstrahlen aus, die von Gegenständen, die sich an oder in der Nähe der Oberleitungen befinden reflektiert werden. Treten nicht erwartete Reflektionsmuster auf, so muß daraus geschlossen werden, daß sich ein nicht erwarteter Gegenstand, wie z.B. ein Wurfanker, an der Oberleitung befindet. Daraufhin wird das Steuersignal aktiviert.

Sowohl ein Mikrowellensensor als auch ein Ultraschallsensor senden Signale aus, die von Gegenständen an oder in der Nähe der Oberleitung reflektiert werden. Wie auch beim Radarsensor werden unerwartete Reflektionsmuster durch die Erkennungsvorrichtung erkannt und das Steuersignal wird aktiviert.

Auch ist es möglich, daß eine Kamera die Oberleitung nach Gegenständen abtastet. Die von der Kamera erfassten Bilder können mit Hilfe optischer Mustererkennungsverfahren durch die Erkennungsvorrichtung analysiert werden. Das können sowohl digitale, als auch analoge, optische Erkennungsverfahren sein. Werden nicht erwartete Gegenstände an oder in der Nähe der Oberleitung erkannt, so wird das Steuersignal aktiviert.

Es wird weiterhin vorgeschlagen, daß die Erkennungsvorrichtung einen Potentialsensor aufweist. Die Oberleitung wird üblicherweise mit einer Hochspannung von 15kv gespeist. Für den Fall, daß ein Gegenstand auf der Oberleitung liegt und dieser Gegenstand in irgendeiner Weise geerdet ist, so treten Potentialeinbrüche auf der Oberleitung auf. Diese Potentialeinbrüche können durch den Potentialsensor erkannt werden. Bei einem Potentialeinbruch kann mit hoher Wahrscheinlichkeit davon ausgegangen werden, daß die Oberleitung beschädigt ist oder das ein Gegenstand auf der Oberleitung liegt. Daraufhin kann das Steuersignal aktiviert werden.

Weiterhin wird vorgeschlagen, daß die Erkennungsvorrichtung einen Hochfrequenzsensor aufweist.

Der Hochfrequenzsensor tastet die Oberleitungen nach Gegenständen ab, indem er die Oberleitungen mit Hochfrequenzsignalen beaufschlagt. Diese Hochfrequenzsignale werden durch die Oberleitungen geleitet. Treten elektrische Abzweigungen in der Oberleitung auf, die durch einen Gegenstand verursacht worden sind, der die Oberleitung z.B. erdet, so ist anhand des Reflektionsmusters der Hochfrequenz der Abstand zwischen Triebwagen und Gegenstand ermittelbar. An jeder Stelle der Oberleitung tritt ein typisches Reflektionsmuster auf. Ist dieses Reflektionsmuster durch einen auf der Oberleitung befindlichen Gegenstand gestört, so kann das Steuersignal aktiviert werden.

Auch wird vorgeschlagen, daß das Schienenfahrzeug eine Warnvorrichtung aufweist, wobei die Warnvorrichtung bei einem erkannten Gegenstand ein optisches und/oder akustisches Warnsignal ausgibt. Durch das akustische Warnsignal kann der Zugführer auf einen nahenden Gegenstand hingewiesen werden. In diesem Fall kann der Zugführer beispielsweise eine Notbremsung einleiten oder eine Bahnleitzentrale über den Gegenstand informieren.

Die Zeit, die dazu benötigt wird, den Stromabnehmer von der Oberleitung zu entfernen, liegt vorzugsweise zwischen einer und fünf Sekunden. Je schneller der Stromabnehmer von der Oberleitung entfernt werden kann, desto geringer muß die Reichweite der Erkennungsvorrichtung sein.

Um einen sicheren Betrieb auch bei sehr hohen Geschwindigkeiten von über 200 km/h zu gewährleisten, wird vorgeschlagen, daß die Oberleitung auf eine Entfernung von bis zu einem Kilometer abgetastet wird, so daß ein entfernter Gegenstand an der Oberleitung erkannt wird, wodurch das Steuersignal aktiviert wird.

Die Erfindung wird im folgenden anhand einer ein Ausführungsbeispiel zeigenden Zeichnung näher erläutert. In der Zeichnung zeigt die einzige Figur eine schematische Darstellung der erfindungsgemäßen Vorrichtung.

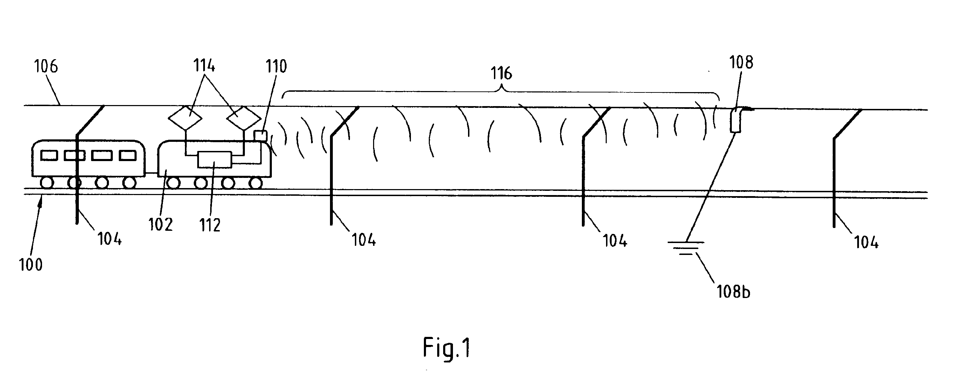

In Fig. 1 ist schematisch ein Schienenfahrzeug 102, daß die erfindungsgemäße Vorrichtung aufweist dargestellt. Außerdem ist die Funktion des erfindungsgemäßen Verfahrens in Fig. 1 näher erläutert. Das die erfindungsgemäße Vorrichtung aufweisende Schienenfahrzeug 102 fährt auf der Bahntrasse 100. Die Bahntrasse 100 weist eine Oberleitung 106 auf, die über die Oberleitungsmasten 104 über der Strecke 100 gehalten wird. Das Schienenfahrzeug 102 weist die Erkennungsvorrichtung 100 auf. Die Erkennungsvorrichtung 110 ist mit der Steuervorrichtung 102 verbunden. Die Steuervorrichtung 112 dient der Steuerung der Stromabnehmer 114. Durch die Steuervorrichtung 112 können die Stromabnehmer 114 ein- und ausgefahren werden. Im ausgefahrenen Zustand stellen die Stromabnehmer 114 einen elektrischen Kontakt zwischen dem im Schienenfahrzeug 102 befindlichen Motor (nicht dargestellt) und der Oberleitung 106. Weiterhin ist in Fig. 1 ein Wurfanker 108 dargestellt, der auf der Oberleitung 106 liegt. Der Wurfanker 108 erdet die Oberleitung 106 über die Leitung 108b.

Während sich das Schienenfahrzeug 102 entlang der Strecke 110 bewegt, wird mit Hilfe der Erkennungsvorrichtung 110 ein Ultraschallsignal 116 ausgesendet. Auch ist denkbar, anstatt des Ultraschallsignals, ein Mikrowellensignal, ein Radarsignal oder ein Lasersignal auszusenden. Weiterhin kann die Erkennungsvorrichtung 110 eine Kamera aufweisen, mit deren Hilfe die Oberleitung 106 beobachtet wird. Mit Hilfe eines Potentialsensors oder eines Hochfrequenzsensors kann auch die elektrische Eigenschaft der Oberleitung 106 durch die Erkennungsvorrichtung 110 beobachtet werden.

Die Erkennungsvorrichtung sendet das Ultraschallsignal 116 entlang der Trasse 100 aus. Das Ultraschallsignal 116 wird in nicht erwarteter Weise durch den Wurfanker 108 reflektiert. Anhand des Reflektionsmusters des Ultraschallsignals 116 ist die Erkennungsvorrichtung 110 in der Lage, den Wurfanker 108 in großer Entfernung zu erkennen. Wird der Wurfanker 108 durch die Erkennungsvorrichtung 110 erkannt, so wird ein Steuersignal an die Steuervorrichtung 112 gesendet. Daraufhin fährt die Steuervorrichtung 112 den Stromabnehmer 114 ein. In der Folge ist ein elektrischer Vortrieb des Schienenfahrzeugs 102 nicht möglich, da keine elektrische Energie mehr vorhanden ist. Das Schienenfahrzeug 102 besitzt jedoch ausreichend kinetische Energie, um den Wurfanker 108 zu passieren. Da die Stromabnehmer 114 beim Erreichen des Wurfankers 108 eingefahren sind, passiert das Schienenfahrzeug 102 den Wurfanker 108 unbeschadet. Ist der Wurfanker 108 passiert, so können die Stromabnehmer 114 ausgefahren werden und ein elektrischer Kontakt kann mit der Oberleitung 106 hergestellt werden. Danach ist eine Weiterfahrt des Schienenfahrzeugs 102 möglich. Um den Zugführer des Schienenfahrzeugs 102 über einen nahenden Wurfanker 108 zu informieren, kann in dem Schienenfahrzeug 102 ein optisches als auch ein akustisches Warnsignal ausgegeben werden. Nachdem der Wurfanker 108 passiert worden ist, kann mit Hilfe geeigneter Mittel eine Information über den Wurfanker 108 an eine Bahnleitzentrale übermittelt werden. Daraufhin kann der Wurfanker 108 entfernt werden.

Durch die erfindungsgemäße Vorrichtung ist es möglich, daß ein Schienenfahrzeug 102 einen Wurfanker 108 oder jeden anderen an oder in der Nähe der Oberleitung befindlichen Gegenstand passiert, ohne das die Stromabnehmer 114 oder die Oberleitung 106 beschädigt wird. Das gewährleistet einen reibungslosen Betrieb des Schienennetzes. Durch die Verwendung der erfindungsgemäßen Vorrichtung entfallen die Sachschäden an den Schienenfahrzeugen 102 und den Oberleitungen 106 als auch Verzögerungen durch Reparaturarbeiten im nachfolgenden Schienenverkehr.

## Patentansprüche

1. Vorrichtung zum Schutz vor Beschädigungen an Bahnoberleitungen und Schienenfahrzeugen durch einen Gegenstand, wobei das Schienenfahrzeug eine den Gegenstand erkennende und ein Steuersignal aussendende Erkennungsvorrichtung aufweist, und wobei das Schienenfahrzeug eine einen Stromabnehmer steuernde Steuervorrichtung aufweist.

2. Vorrichtung nach Anspruch 1,
**dadurch gekennzeichnet,**
**daß** die Erkennungsvorrichtung einen Lasersensor aufweist

3. Vorrichtung nach Anspruch 1,
**dadurch gekennzeichnet,**
**daß** die Erkennungsvorrichtung einen Radarsensor aufweist.

4. Vorrichtung nach Anspruch 1,
**dadurch gekennzeichnet,**
**daß** die Erkennungsvorrichtung einen Mikrowellensensor aufweist.

5. Vorrichtung nach Anspruch 1,
**dadurch gekennzeichnet,**
**daß** die Erkennungsvorrichtung eine Kamera aufweist.

6. Vorrichtung nach Anspruch 1,
**dadurch gekennzeichnet,**
**daß** die Erkennungsvorrichtung einen Ultraschallsensor aufweist.

7. Vorrichtung nach Anspruch 1,
**dadurch gekennzeichnet,**
**daß** die Erkennungsvorrichtung einen Potentialsensor aufweist.

8. Vorrichtung nach Anspruch 1,
**dadurch gekennzeichnet,**
**daß** die Erkennungsvorrichtung einen Hochfrequenzsensor aufweist.

9. Vorrichtung nach einem der Ansprüche 1 bis 8,
**dadurch gekennzeichnet,**
**daß** das Schienenfahrzeug eine akustische und/oder optische Warnvorrichtung aufweist.

10. Verfahren zum Schutz vor Beschädigungen an Bahnoberleitungen und Schienenfahrzeugen durch einen Gegenstand, insbesondere unter Verwendung einer Vorrichtung nach einem der Ansprüche 1 bis 9, bei welchem ein Gegenstand auf der Bahnoberleitung erkannt wird und bei welchem bei einem erkannten Gegenstand ein Steuersignal an die Steuervorrichtung gesendet wird, wodurch ein Stromabnehmer von der Oberleitung entfernt wird.

11. Verfahren nach Anspruch 10,
**dadurch gekennzeichnet,**
**daß** der Stromabnehmer in einer Zeit zwischen einer und fünf Sekunden von der Oberleitung entfernt wird.

12. Verfahren nach einem der Ansprüche 10 oder 11,
**dadurch gekennzeichnet,**
**daß** die Oberleitung auf einer Entfernung von bis zu einem Kilometer abgetastet wird, so daß ein entfernter Gegenstand an der Oberleitung erkannt wird, wodurch das Steuersignal aktiviert wird.
